# EUROPÄISCHE PATENTSCHRIFT

(11) **EP 1 682 400 B1**
(45) Veröffentlichungstag und Bekanntmachung des Hinweises auf die Patenterteilung: **29.12.2010**
(21) Anmeldenummer: 04761065.4
(22) Anmeldetag: 11.10.2004
(51) Int. Cl.: B62D 9/00, B62D 6/00

(54) **VERFAHREN ZUR SCHADENSBEGRENZUNG BEI TEIL BEDECKTER FRONTAL KOLLISION UND KRAFTFAHRZEUG MIT EINER DAZU DIENENDEN VORRICHTUNG**
METHOD FOR LIMITING DAMAGE IN THE EVENT OF A PARTIALLY OVERLAPPING HEAD-ON COLLISION, AND MOTOR VEHICLE EQUIPPED WITH A CORRESPONDING DEVICE
PROCEDE DE LIMITATION DE DOMMAGES EN CAS DE CHOC FRONTAL A RECOUVREMENT PARTIEL ET AUTOMOBILE EQUIPEE D'UN DISPOSITIF APPROPRIE CORRESPONDANT

(30) Priorität: 31.10.2003 AT 7542003 U
(43) Veröffentlichungstag der Anmeldung: 26.07.2006
(73) Patentinhaber: Magna Steyr Fahrzeugtechnik AG & Co KG, 8041 Graz (AT)
(72) Erfinder: KALTENMESSER, Christian, A-8010 Graz (AT); WINKLER, Stephan, A-8010 Graz (AT); HIRSCHBERG, Wolfgang, A-8010 Graz (AT); AKGÜN, Toros, A-8041 Graz (AT)
(74) Vertreter: Harringer, Thomas
(86) Internationale Anmeldenummer: PCT/AT2004/000343
(87) Internationale Veröffentlichungsnummer: WO 2005/042335

(56) Entgegenhaltungen:
- EP-A- 1 125 826
- WO-A-02/094618
- DE-A1- 10 100 743
- DE-A1- 10 113 098
- US-A- 5 332 057

## Beschreibung

Die Erfindung betrifft ein Verfahren zur Schadensbegrenzung bei teilüberdeckter Frontalkollision zweier Kraftfahrzeuge und ein Kraftfahrzeug mit einer dazu dienenden Vorrichtung. Unter einer teilüberdeckten Frontalkollision ist eine Frontalkollision zu verstehen, bei der die Fahrzeuge sich mit im wesentlichen parallelen, aber seitlich gegeneinander versetzten Richtungsvektoren aufeinander zu bewegen. Die Kollisionszone ist somit nur ein seitlicher Teil des Vorderwagens.

Dieser seitliche Teil vor der Fahrgastzelle ist bei Fahrzeugen gewöhnlich weniger steif als der mittlere Teil vor der Fahrgastzelle und nimmt auch weniger Kollisionsenergie auf, sodass die Verformungen der Fahrgastzelle erheblich sind. Es besteht insbesondere die Gefahr, dass das jeweilige Rad in den Passagierraum eindringt, man spricht von einer Intrusionszone. Darüber hinaus tritt bei solchen Kollisionen in der Regel noch ein besonders gefährliches Phänomen auf: Bereits bei relativ kleiner Überdeckung verhaken sich die kollisionsseitigen Vorderräder der beiden Fahrzeuge ineinander. Dadurch wirken nicht nur besonders starke Längskräfte auf die Räder, die sie zum Passagierraum stoßen, sondern die beiden Fahrzeuge werden teilweise formschlüssig miteinander verbunden und so deren Vorbeigleiten aneinander verhindert. Durch die kinetische Energie der beiden aussermittig aufeinander treffenden Fahrzeuge wird den beiden dann ineinander verhakten Fahrzeugen noch ein Drall um die Hochachse erteilt.

Dieses Phänomen ist in der Literatur unter eben dem Namen "Verhaken" bekannt. Als Gegenmaßnahme ist aus der WO 02/094618 A1 - von der die Erfindung ausgeht - bekannt, dass durch ein eine beginnende oder kurz bevorstehende Kollision meldendes Signal explosionsartig und unwiderruflich ein derartiges Einschlagen der lenkbaren Vorderräder ausgelöst wird, dass die Radebene des kollisionsseitigen Rades die vertikale Längsmittenebene des Fahrzeuges vor diesem schneidet. Durch diesen "positiven" Lenkeinschlag des kollisionsseitigen Rades kann sich dieses nicht im kollisionsseitigem Rad des Kollisionsgegners verhaken; die Außenseite der Felge des Rades wirkt vielmehr als Schutzschild, an dem das Gegenfahrzeug beziehungsweise dessen kollisionsseitiges Rad abgleitet. Um dem dabei ausgeübten Stoßmoment um die Gierachse entgegenzuwirken, wird das kollisionsabseitige Rad gegensinnig, also ebenfalls einwärts eingeschlagen. Dann bildet der Grundriss der Radebene ein V mit vor dem Fahrzeug liegender Spitze.

Diese Vorgangsweise ist aber in zweierlei Hinsicht noch unzureichend:
1°. Wenn die Kollision stattfindet, wirkt auf das Fahrzeug ein Stoßmoment um die Gierachse, das es aus der Bahn zu schleudern droht.
2° Wenn die Kollision im letzten Moment noch verhindert wird, also bei bereits eingeschlagenen Rädern doch nicht stattfindet, ist das Fahrzeug unlenkbar und es kann nicht weitergefahren werden, weil die Räder unwiderruflich eingeschlagen sind.

Der Erfindung liegt folglich die Aufgabe zugrunde, in diesen beiden Hinsichten Abhilfe zu schaffen. Es soll das stoßbedingte Giermoment minimiert werden und nach einer doch-nicht-stattgefunden-habenden Kollision weitergefahren werden können. Erfindungsgemäß wird das dadurch erreicht, dass zumindest das kollisionsseitige Rad wieder in die Ausgangsposition zurückbewegt wird, wenn entweder innerhalb einer bestimmte Zeit nach dem ersten Signal keine Kollision stattgefunden hat oder wenn ein von einem weiteren Sensor abgegebenes zweites Signal die tatsächlich aufgetretene Kollision meldet, wobei die Ausgangsposition die Position ist, in der sich die Räder zum Zeitpunkt der Abgabe des ersten Signals befanden. Je nachdem, welche der beiden Situationen vorliegt, werden so die Räder in geeigneter Weise in die Ausgangsposition zurückbewegt. Die Ausgangsposition ist die Position zum Zeitpunkt, zu dem das erste Signal eine wahrscheinliche Kollision vorhersagt, weil der Fahrer angesichts der bevorstehenden Kollision verzweifelte Ausweichversuche gemacht haben könnte.

Vorzugsweise wird das erste Signal erzeugt, indem die von einem Sensor repetitiv aufgenommenen Richtungs- und Entfernungsdaten anhand von Kriterien ausgewertet werden, und abgegeben, wenn das Resultat der Auswertung eine Kollisionswahrscheinlichkeit feststellt, die über einem vorgegebenen Wert liegt (Anspruch 2).

Wenn der zweite Sensor (zum Beispiel ein Verzögerungssensor) die tatsächlich aufgetretene Kollision wird von feststellt und das zweite Signal abgibt, ist es vorteilhaft, das kollisionsseitige lenkbare Rad in seine Ausgangsstellung zurück zu bewegen und das nicht kollisionsseitige Rad noch eingeschlagen zu lassen (Anspruch 3). Das nicht kollisionsseitige Rad wird erst dann in die Ausgangsstellung zurückbewegt, wenn die Giergeschwindigkeit des Fahrzeuges nahezu Null ist (Anspruch 4). Damit wird der durch die Kollision verursachten Fahrzeugdrehung um die Gierachse entgegengewirkt und eine mögliche Sekundärkollision verhindert. Wenn ein Giergeschwindigkeitssensor vorhanden ist, kann die Zeit, während der das nicht kollisionsseitige Rad eingeschlagen bleibt, genau dosiert werden.

Oder es werden in der anderen Situation, der doch-nicht-stattgefunden-habenden Kollision, bei Ausbleiben des zweiten Signales innerhalb einer bestimmten Zeitspanne, beide Räder wieder in ihre Ausgangsposition zurückbewegt (Anspruch 5). Die Ausgangsposition ist vorzugsweise die Position vor dem ersten Signal (das die Wahrscheinlichkeit einer Kollision vorhersagt), weil der Fahrer angesichts der bevorstehenden Kollision verzweifelte Ausweichversuche gemacht haben könnte. So kann die Fahrt ungehindert fortgesetzt werden.

In Verfeinerung des erfindungsgemäßen Verfahrens kann das erste Signal das Einschlagen der Räder zu einem Zeitpunkt auslösen, der von der Annäherungsgeschwindigkeit der beiden Fahrzeuge abhängt (Anspruch 6). Dadurch erreichen die Räder die eingeschlagene Stellung erst unmittelbar vor der Kollision.

Ein erfindungsgemäßes Kraftfahrzeug umfasst die Merkmale des Anspruchs 7. Unter Verbindungsele menten sind Spurstangen, Lenkhebel und/oder dergleichen zu verstehen. Wesentlich ist, dass der Aktuator reversibel ist, das heisst, dass er auf Kommando auch wieder in seine Ausgangsstellung zurückkehren kann. Vorzugsweise ist so ein Aktuator ein Elektromotor (Anspruch 9) mit entsprechenden Übersetzungs- beziehungsweise Übertragungsmitteln.

In der bevorzugten Ausführung der Erfindung sind zwei Aktuatoren mit je einer eigenen externen Kraftquelle vorgesehen, wobei jeder Aktuator einem lenkbaren Rad zugeordnet ist (Anspruch 8). Dadurch wird die selektive Rückführung der lenkbaren Räder in die Ausgangsstellung möglich.

Im folgenden wird die Erfindung anhand von Abbildungen beschrieben und erläutert. Es stellen dar:
- Fig. 1:: Ein erfindungsgemäßes Fahrzeug,
- Fig. 2:: dasselbe in einer ersten Phase,
- Fig. 3:: dasselbe in einer zweiten Phase, unmittelbar vor Kollision,
- Fig. 4:: dasselbe in einer dritten Phase, während der Kollision,
- Fig. 5:: dasselbe in einer vierten Phase, unmittelbar nach Kollision,
- Fig. 6:: dasselbe in einer fünften Phase, nach Kollision,
- Fig. 7:: dasselbe in einer vierten Phase, wenn doch keine Kollision,

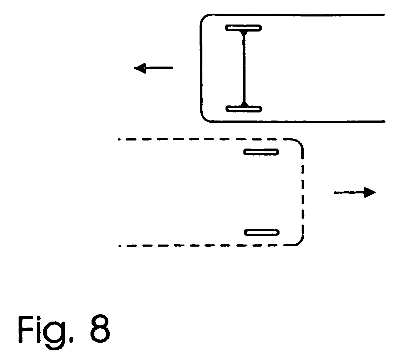

- Fig. 8:: Flussschaubild zu Fig. 1..

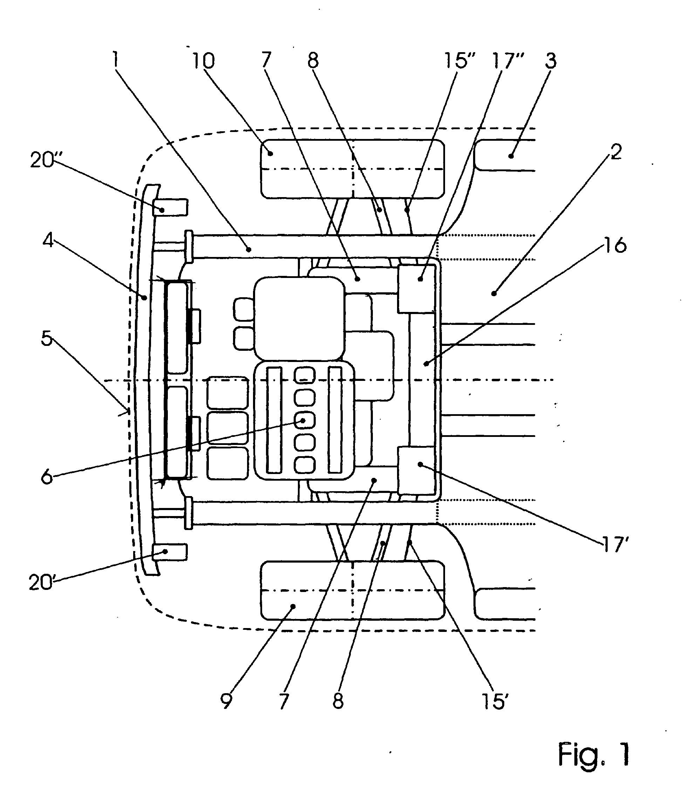

**Fig. 1** zeigt schematisch die Frontpartie eines für die Ausübung des erfindungsgemäßen Verfahrens ausgestatteten Kraftfahrzeuges. Sie besteht aus Rahmenlängsträgern 1, die an einer Bodenplatte 2 anschließen, welche ihrerseits durch Schweller 3 seitlich begrenzt ist. Das vordere Ende des Kraftfahrzeuges wird von einem Stoßfänger 4 gebildet, der dem vorderen Teil der Fahrzeugkontur 5 (strichliert) folgt. Ein Motorgetriebeblock 6 ist nur angedeutet. An Aufhängungslagern 7, die an den Rahmenlängsträgem befestigt oder Teil eines Fahrschemels sind, sind beispielsweise Querlenker 8 geführt. In dieser Weise ist ein linkes Vorderrad 9 und ein rechtes Vorderrad 10 aufgehängt.

Die beiden Vorderräder 9, 10 sind in der üblichen Weise mittels Lenkhebeln schwenkbar, an denen eine linke Spurstange 15' und eine rechte Spurstange 15" angreift. Zwischen diesen Spurstangenteilen 15', 15" ist ein Lenkgetriebe 16 und sind beiderseits des Lenkgetriebes erfindungsgemäß reversible Aktuatoren 17',17" vorgesehen, die von einem Steuergerät aus über Befehlsleitungen angesteuert werden. Die Ansteuerung besteht in Steuersignalen, die im Steuergerät durch Auswertung der Signale eines ersten Sensors gewonnen werden, der zweckmäßig auf der Seite der Straßenmitte angebracht ist, oder, noch besser, der Signale zweier derartiger Sensoren 20', 20", einen auf jeder Seite, und/oder am Bug des Fahrzeuges. Ein derartiger Sensor ist beispielsweise ein Laserscanner von der in dem Artikel "Nahfeldüberwachung rund um das Fahrzeug: Der Laserscanner und seine Möglichkeiten zur Entlastung des Fahrers" (Autoren: Lages, Fürstenberg, Willhoeft, verteilt in Berlin am 03.05.2003 beim VDI - Kongress "The driver in the 21st century") beschriebenen Bauart und Arbeitsweise. Die Signale des ersten Sensors sind somit Richtungs- und Entfemungssignale in "real time". Weiters ist an einer geeigneten Stelle ein Verzögerungssensor vorgesehen, der über Signalleitungen mit dem Steuergerät verbunden ist.

Die reversiblen Aktuatoren 17',17" wirken jeder jeweils auf einen der beiden Spurstangenteile 15', 15" oder direkt auf die Lenkhebel. Dabei kann es sich um eine Zahnstangenlenkung oder um eine beliebige andere Lenkung handeln. Im Falle einer vollelektronischen Lenkung können die Aktuatoren 17',17" auch die Lenkservomotoren selbst sein.

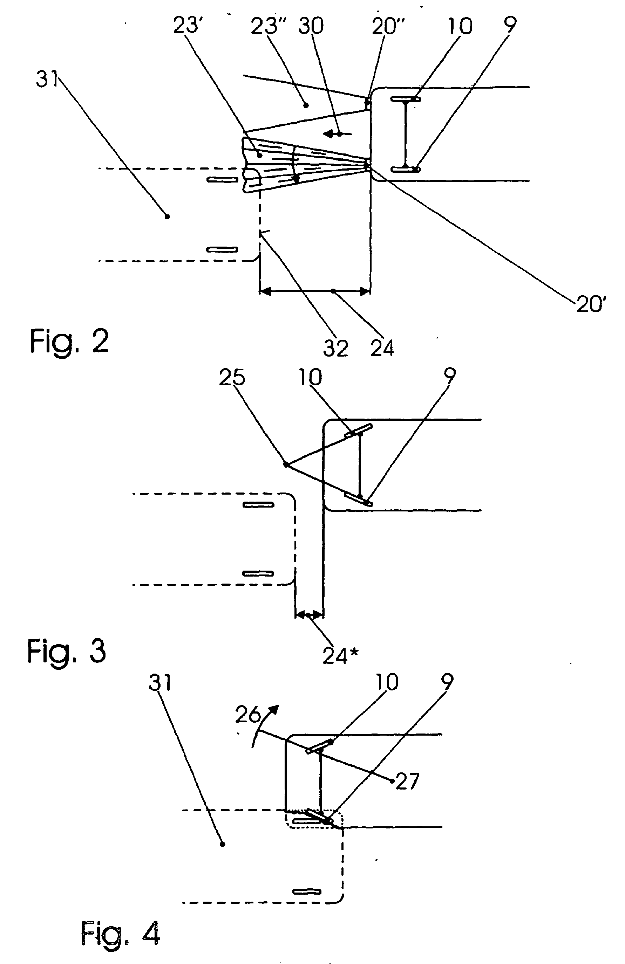

**Fig. 2** zeigt das erfindungsgemäß ausgestattete Kraftfahrzeug (in Volllinie), das sich in Richtung und Geschwindigkeit gemäß dem Pfeil 30 fortbewegt, unmittelbar vor einer teilüberdeckten Frontalkollision mit einem Kollisionsgegner 31 mit einer Kontur 32 (strichliert). Der Kollisionsgegner 31 braucht nicht erfindungsgemäß ausgestattet zu sein. Zu diesem Zeitpunkt hat die Strahlkeule des Sensors 20' den zukünftigen Kollisionsgegner 31 in Richtung und Entfernung bereits erfasst. Mit abnehmender Entfernung 24 steigt die Wahrscheinlichkeit einer Kollision. Sobald diese einen vorgegebenen Wert erreicht hat (entsprechend einer ziemlich sicher bevorstehende Kollision) ergeht das erste Signal an die Aktuatoren 17', 17" auf beiden Seiten.

In **Fig. 3** sieht man, dass die Aktuatoren 17', 17" in minimalem Abstand 24* vom Kollisionsgegner 31, so spät wie möglich, die lenkbaren Vorderräder 9,10 gegensinnig einschlagen. Gegensinnig heisst so, dass die gedachten Radebenen einander in einem Punkt 25 vor dem Fahrzeug schneiden.

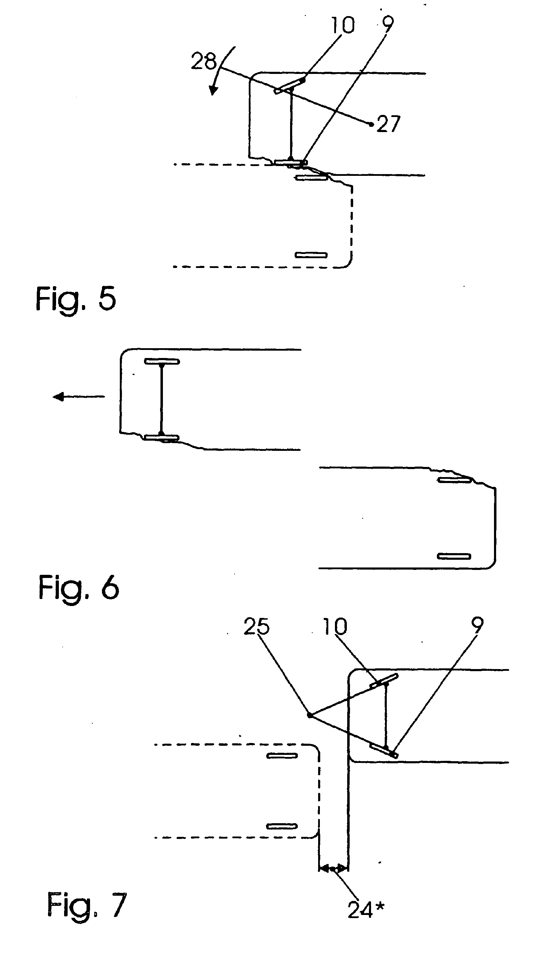

In **Fig. 4****.** ist es so weit. Die Fahrzeuge befinden sich in Kollision. Die Kontur 32 des Kollisionsgegners 31 ist bereits in die Kontur unseres Fahrzeuges eingedrungen und berührt das eingeschlagene Rad 9. Dieses bildet gewissermaßen einen Schild, der die Fahrzeuge auseinanderdrückt und so ein Verhaken der Vorderräder verhindert. Dabei wirkt auf unser Fahrzeug ein Stoßmoment (Pfeil 26) um dessen Schwerpunkt 27. Bereits im ersten Moment der Kollision hat der Verzögerungssensor angesprochen und dadurch - mit Zeitverzögerung - ein weiteres Signal an den Aktuator des kollisionseitigen Rades 9 ausgelöst. Dieses weitere Signal führt zu Fig. 5.

In **Fig. 5** hat der Aktuator das Rad 9 wieder in seine ursprüngliche Stellung zurückgebracht, derweil das nicht an der Kollision beteiligte Rad 10 einwärts eingeschlagen bleibt. Dadurch wirkt ein Moment (Pfeil 28) im dem Stoßmoment 26 in Fig. 4 entgegengesetzten Drehsinn auf das Fahrzeug. So wird die Gierbewegung des Fahrzeuges bei ausreichender Dauer zum Erliegen gebracht und das Fahrzeug behält ungefähr seinen ursprünglichen Kurs bei, allerdings mit einem seitlichen Versatz. Dadurch wird die Gefahr von Folgekollisionen mit weiteren Fahrzeugen erheblich vermindert. Die für das Beenden der Gierbewegung ausreichende Dauer wird entweder vom Steuergerät berechnet, oder es ist ein Gierwinkelsensor vorgesehen, der das meldet. Ist diese Dauer erreicht, bekommt auch der auf das nicht an der Kollision beteiligte Rad 10 wirkende Aktuator das Signal, sein Rad 10 in die ursprüngliche Stellung zurückzubringen, siehe **Fig. 6****.**

**Fig. 7** schließt alternativ an die Situation der Fig. 3 an. Wenn nämlich innerhalb einer bestimmten Zeit nach dem einwärts Einschlagen beider Räder wider Erwarten doch keine Kollision stattfindet, der Verzögerungssensor 22 also nicht anspricht, bekommen beide Aktuatoren das weitere Signal, beide eingeschlagenen Räder 9,10, wieder in ihre Ausgangsposition zurückzuführen und die Fahrt kann fortgesetzt werden.

## Patentansprüche

1. Verfahren zur Schadensbegrenzung bei teilüberdeckter Frontalkollision zweier Kraftfahrzeuge, wobei ein eine bevorstehende Kollision meldendes erstes Signal ein gegensinniges einwärts Einschlagen der lenkbaren Vorderräder (9,10) auslöst, **dadurch gekennzeichnet, dass** zumindest das kollisionsseitige lenkbare Rad wieder in die Ausgangsposition zurückbewegt wird, wenn entweder innerhalb einer bestimmte Zeit nach dem ersten Signal keine Kollision stattgefunden hat oder wenn ein von einem weiteren Sensor (22) abgegebenes zweites Signal die tatsächlich aufgetretene Kollision meldet, wobei die Ausgangsposition die Position ist, in der sich die Räder zum Zeitpunkt der Abgabe des ersten Signals befanden.

2. Verfahren nach Anspruch 1, **dadurch gekennzeichnet, dass** das erste Signal erzeugt wird, indem die von mindestens einem Sensor (20; 20',20") repetitiv aufgenommenen Richtungs- und Entfernungsdaten anhand von Kriterien ausgewertet werden, und das erste Signal abgegeben wird, wenn das Resultat der Auswertung eine Kollisionswahrscheinlichkeit feststellt, die über einem vorgegebenen Wert liegt.

3. Verfahren nach Anspruch 1, **dadurch gekennzeichnet, dass** bei Abgabe des zweiten Signals nur das kollisionsseitige lenkbare Rad (9) in seine Ausgangsstellung zurückbewegt wird und das andere Rad (10) noch eingeschlagen bleibt.

4. Verfahren nach Anspruch 3, **dadurch gekennzeichnet, dass** das nicht kollisionsseitige Rad (10) erst dann in die Ausgangsstellung zurückbewegt wird, wenn die Giergeschwindigkeit des Fahrzeuges nahezu Null ist.

5. Verfahren nach Anspruch 1, **dadurch gekennzeichnet, dass** bei Ausbleiben des zweiten Signals innerhalb einer bestimmten Zeitspanne beide Räder (9,10) wieder in ihre Ausgangsposition zurückbewegt werden.

6. Verfahren nach Anspruch 3, **dadurch gekennzeichnet, dass** das erste Signal das Einschlagen der Räder zu einem Zeitpunkt auslöst, der von der Annäherungsgeschwindigkeit der beiden Fahrzeuge abhängt.

7. Kraftfahrzeug mit einer Vorrichtung zur Schadensbegrenzung bei teilüberdeckter Frontalkollision, wobei das Kraftfahrzeug einen ersten_Sensor zur Detektion einer, vorzugsweise bevorstehenden, Kollision sowie eine den Vorderrädern (9,10) zugeordnete Lenkvorrichtung (13,14,15,16) besitzt, **dadurch gekennzeichnet, dass** ein mit dem ersten oder einem weiteren Sensor geeignet verbundenes System zur Steuerung der Radrückstellung vorgesehen ist und ferner_in der Lenkvorrichtung (13,14,15,16) mindestens ein reversibler Aktuator (17; 17',17") mit einer Kraftquelle vorgesehen ist, der über Verbindungselemente (15',15") auf den Einschlag der lenkbaren Räder (9,10) in der Weise einwirkt, dass die Räder (9,10) sowohl gegensinnig eingeschlagen werden können als auch über das System zur Steuerung der Radrückstellung zumindest das kollisionsseitige lenkbare Rad (9) in die Ausgangsstellung zurück bewegt werden kann.

8. Kraftfahrzeug nach Anspruch 7, **dadurch gekennzeichnet, dass** zwei Aktuatoren (17',17") mit einer externen Kraftquelle vorgesehen sind, wobei jeder Aktuator einem lenkbaren Rad (9,10) zugeordnet ist.

9. Kraftfahrzeug nach Anspruch 7, **dadurch gekennzeichnet, dass** der Aktuator (17; 17',17") ein Elektromotor ist.

## Claims

1. Method for damage limitation in the event of an offset frontal collision between two motor vehicles, with a first signal which signals an imminent collision triggering the steerable front wheels (9, 10) to turn inward in opposite directions, **characterized in that** at least the steerable wheel on the collision side is moved back to the initial position again if either no collision has taken place within a certain time after the first signal or if a second signal which is transmitted by a further sensor (22) signals the collision which actually occurs, with the initial position being the position which the wheels were in at the time the first signal was transmitted.

2. Method according to Claim 1, **characterized in that** the first signal is generated by the direction and distance data which is repetitively recorded by at least one sensor (20; 20', 20") being evaluated on the basis of criteria, and the first signal being transmitted when the result of the evaluation determines a collision probability which is above a predefined value.

3. Method according to Claim 1, **characterized in that**, when the second signal is transmitted, only the steerable wheel (9) on the collision side is moved back to its initial position and the other wheel (10) remains turned.

4. Method according to Claim 3, **characterized in that** the wheel (10) which is not on the collision side is moved back to the initial position only when the yaw rate of the vehicle is virtually zero.

5. Method according to Claim 1, **characterized in that** both wheels (9, 10) are moved back to their initial position again if the second signal is not transmitted within a specific period of time.

6. Method according to Claim 3, **characterized in that** the first signal triggers the wheels to turn at a time which depends on the speed at which the two vehicles approach one another.

7. Motor vehicle having an apparatus for damage limitation in the event of an offset frontal collision, with the motor vehicle having a first sensor for detecting a, preferably imminent, collision and a steering apparatus (13, 14, 15, 16) which is associated with the front wheels (9, 10), **characterized in that** a system for controlling resetting of the wheel is provided, the said system being suitably connected to the first or a further sensor, and furthermore at least one reversible actuator (17; 17', 17") with a power source is provided in the steering apparatus (13, 14, 15, 16) and influences the turning of the steerable wheels (9, 10) via connecting elements (15', 15") such that the wheels (9, 10) can be turned both in opposite directions and at least the steerable wheel (9) on the collision side can be moved back to the initial position by means of the system for controlling resetting of the wheel.

8. Motor vehicle according to Claim 7, **characterized in that** two actuators (17', 17") with an external power source are provided, with each actuator being associated with a steerable wheel (9, 10).

9. Motor vehicle according to Claim 7, **characterized in that** the actuator (17; 17', 17") is an electric motor.

## Revendications

1. Procédé de limitation des dommages en cas de collision frontale avec recouvrement partiel de deux véhicules automobiles, dans lequel un premier signal qui annonce une menace de collision déclenche un pivotement vers l'intérieur des roues avant directrices (9, 10),
**caractérisé en ce que**
au moins la roue directrice située du côté de la collision est ramenée dans la position de départ si aucune collision n'a eu lieu à l'intérieur d'une durée définie qui suit le premier signal ou si un deuxième signal délivré par un autre détecteur (22) annonce que la collision a effectivement eu lieu, la position de départ étant la position dans laquelle les roues se trouvaient au moment où le premier signal a été émis.

2. Procédé selon la revendication 1, **caractérisé en ce que** le premier signal est formé en évaluant à l'aide de critères les données d'orientation et de distance enregistrées à répétition par au moins un détecteur (20; 20', 20") et **en ce que** le premier signal est délivré si le résultat de l'évaluation constate une probabilité de collision supérieure à une valeur prédéterminée.

3. Procédé selon la revendication 1, **caractérisé en ce que** lorsque le deuxième signal est émis, seule la roue directrice (9) située du côté de la collision est ramenée dans sa position de départ, l'autre roue (10) restant pivotée vers l'intérieur.

4. Procédé selon la revendication 3, **caractérisé en ce que** la roue (10) non située du côté de la collision n'est ramenée dans sa position de départ que lorsque la vitesse de lacet du véhicule est pratiquement nulle.

5. Procédé selon la revendication 1, **caractérisé en ce que** si le deuxième signal n'est pas apparu pendant une durée définie, les deux roues (9, 10) sont ramenées dans leur position de départ.

6. Procédé selon la revendication 3, **caractérisé en ce que** le premier signal déclenche le pivotement vers l'intérieur des roues à un instant qui dépend de la vitesse de rapprochement des deux véhicules.

7. Véhicule automobile doté d'un dispositif de limitation de dommage en cas de collision frontale avec recouvrement partiel, le véhicule automobile présentant un premier détecteur qui détecte de préférence une menace de collision, ainsi qu'un dispositif de direction (13, 14, 15, 16) associé aux roues avant (9, 10),
**caractérisé en ce que**
un système relié de manière appropriée au premier détecteur ou à un autre détecteur est prévu pour commander le rappel des roues et en outre, au moins un actionneur réversible (17; 17', 17") doté d'une source de force est prévu dans le dispositif de direction (13, 14, 15, 16) et agit sur le pivotement vers l'intérieur des roues directrices (9, 10) par l'intermédiaire d'éléments de liaison (15', 15"), de telle sorte qu'à la fois les roues (9, 10) puissent être pivotées vers l'intérieur dans des sens opposés et qu'au moins la roue directrice (9) située côté collision puisse être ramenée dans sa position de départ par le système de commande du rappel des roues.

8. Véhicule automobile selon la revendication 7, **caractérisé en ce que** deux actionneurs (17', 17") dotés d'une source externe de force sont prévus, chaque actionneur étant associé à une roue directrice (9, 10).

9. Véhicule automobile selon la revendication 7, **caractérisé en ce que** l'actionneur (17; 17', 17") est un moteur électrique.
